(19) Europäisches Patentamt
European Patent Office
Office européen des brevets

(11) Publication number: 0 207 381
A2

(12) # EUROPEAN PATENT APPLICATION

(21) Application number: 86108356.6

(22) Date of filing: 19.06.86

(51) Int. Cl.4: C08L 69/00 , C08L 67/02 , C08L 71/04 , C08L 25/06 , C08K 5/42

(30) Priority: 01.07.85 US 750789

(43) Date of publication of application: 07.01.87 Bulletin 87/02

(84) Designated Contracting States: DE FR GB IT NL

(71) Applicant: GENERAL ELECTRIC COMPANY
1 River Road
Schenectady New York 12305(US)

(72) Inventor: Allen, Deborah Lynne
Route 49 Yokun Road
Pittsfield Massachusetts 01201(US)

(74) Representative: Catherine, Alain
General Electric - Deutschland Munich
Patent Operations Frauenstrasse 32
D-8000 München 5(DE)

(54) **Resinous compositions.**

(57) Resinous thermoplastic composition comprised of, in physical admixture: (i) at least one copolyester-carbonate resin, and (ii) at least one resin selected from polyphenylene ether resins or mixtures of polyphenylene ether resins and polystyrene resins.

EP 0 207 381 A2

## RESINOUS COMPOSITIONS

Copolyester-carbonate resins are well known thermoplastic materials which, due to their many advantageous mechanical properties, are finding increasing use as thermoplastic engineering materials. These copolyester-carbonate resins exhibit, for example, excellent properties of toughness, flexibility, impact strength, optical clarity, and thermal resistance. However, these resins are generally somewhat difficult to process, and do not possess the requiste tensile modulus needed for certain applications.

Resins such as polyphenylene ethers exhibit good tensile modulus and good processability, while resins such as polystyrenes exhibit excellent processability and good impact properties.

Thus a multicomponent blend can be hypothesized on the bsis of blending resins possessing certain strong properties with resins exhibiting weaknesses in those same properties. However, certain practical considerations inhibit implementation of this theory. For example, not all resins are compatible with each other. Thus, blends of incompatible resins exhibit certain weaknesses and disadvantageous properties among which is the fact that the strong properties of certain resins do not complement or overcome the weaknesses in these same properties of the other resinous component in the blends.

It is an object of the instant invention to provide blends in which the resinous components are compatible and in which the weaknesses of copolyester-carbonate resins in the areas of tensile modulus and processability are offset by the strengths in these properties exhibited by polyphenylene ether resins or mixtures of polyphenylene ether resins and polystyrene resins.

In accordance with the instant invention there is provided a novel composition comprised of, in physical admixture, (i) at least one copolyester-carbonate resin, and (ii) at least one resin selected from polyphenylene ether resins or mixtures of polyphenylene ether resins and polystyrene resins. These blends exhibit good compatability of the components and can be molded into various articles.

In accordance with the instant invention there is provided a blend exhibiting good compatability of its component parts comprised of (i) at least one copolyester-carbonate resin, and (ii) at least one resin selected from polyphenylene ether resin or mixtures of polyphenylene ether and polystyrene resins.

Briefly stated, the copolyester-carbonates of this invention contain recurring carbonate groups, carboxylate groups, and aromatic carbocyclic groups in the linear polymer chain, in which at least some of the carbonate groups and at least some of the carboxylate groups are bonded directly to ring carbon atoms of the aromatic carbocyclic groups.

These copolyester-carbonates contain ester bonds and carbonate bonds in the polymer chain, wherein the amount of ester bonds is from about 25 to about 90 mole percent,, preferably from about 35 to about 80 mole percent. For example, 5 moles of bisphenol-A reacting completely with 4 moles of ispohthaloyl dichloride and one mole of phosgene would give a copolyester-carbonate of 80 mole percent ester bonds.

The copolyester-carbonates may be prepared by known conventional methods such as, for example, interfacial polymerization, melt polymerization, transesterification, etc. The copolyester-carbonates and methods for their preparation are disclosed, inter alia, in U.S. Patent Nos. 3,169,121, 4,156,069, 4, 238,596 and 4,238,597, all of which are incorporated herein by reference.

The copolyester-carbonates may be conveniently prepared via the interfacial polymerization process by reacting (a) at least one dihydric phenol, (b) at least one ester precursor, and (c) a carbonate precursor.

The dihydric phenols useful in the preparation of the copolyester-carbonates are known dihydric phenols which may be represented by the formula

I. 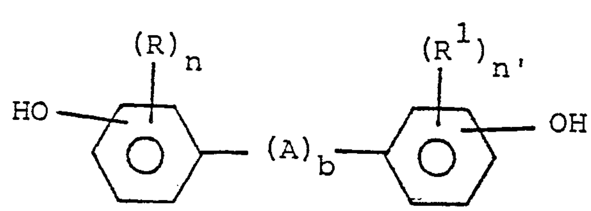

wherein:

R is independently selected from halogen, monovalnet hydrocarbon, and monovalent hydrocarbonoxy radicals;

$R^1$ is independently selected from halogen, monovalent hydrocarbon, and monovalent hydrocarbonoxy radicals;

A is selected from divalent hydrocarbon radcals,

$$-O-,\ -S-,\ -\overset{\overset{\displaystyle O}{\|}}{C}-,\ -S-S-,\ -\overset{\overset{\displaystyle O}{\|}}{S}-,\ \text{and}\ -\underset{\underset{\displaystyle O}{\|}}{\overset{\overset{\displaystyle O}{\|}}{S}}-;$$

n and n' are independently selected from positive integers having a value of from 0 to 4 inclusive; and

b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The preferred cycloalkyl radicals are those containing from 4 to about 8 ring carbon atoms. The preferred aryl radicals are those containing from 6 to 12 ring carbon atoms, i.e., phenyl, biphenyl and naphthyl. The preferred aralkyl and alkaryl radicals are those containing from 7 to about 20 carbon atoms.

The preferred halogen radicals represented by R and $R^1$ are chlorine and bromine.

The monovalent hydrocarbonoxy radicals represented by R and $R^1$ are those of the formula -$OR^2$ wherein $R^2$ is a monovalent hydrocarbon radical as defined for R and $R^1$.

The divalent hydrocarbon radicals represented by A include the arylene, alkylene, alkylidene. cycloalkylene, and cycloalkylidene radicals. The preferred arylene radicals are those containing from 6 to 12 ring carbon atoms, i.e., phenylene, naphthylene, and biphenylene. The preferred alkylene radicals are those containing from 2 to about 30 carbon atoms. The preferred alkylidene radicals are those containing from 1 to about 30 carbon atoms. The preferred cycloalkylene and cycloalkylidene radicals are those containing from 6 to about 16 ring carbon atoms.

In the dihydric phenol compounds represented by Formula I R and $R^1$ may be the same or they may be different. When more than one R substituent is present they may be the same or different. Likewise, when more than one $R^1$ substituent is present they may be the same or different. Where b is zero in Formula I the aromatic rings are directly joined with no intervening alkylene or other bridging group. The positions of the hydroxyl groups and R and $R^1$ on the aromatic nuclear residues can be varied in the ortho, meta or para positions and the groups can be in a vicinal, asymmetrical or symmetrical relationship where two or more aromatic ring carbon atoms are substituted with R or $R^1$ and hydroxyl.

Some illustrative non-limiting examples of the dihydric phenols of Formula I include:

2,2-bis(4-hydroxyphenyl)propane (bisphenol-A);

2,2-bis(3,5-dimethyl-4-hydroxyphenyl)propane;

2,2-bis(3,5-dibromo-4-hydroxyphenyl)propane;

1,1-bis(3,5-dimethyl-4-hydroxyphenyl)cyclohexane;

1,1-bis(4-hydroxyphenyl)cyclohexane;

1,1-bis(4-hydroxyphenyl)octane;

1,5-bis(4-hydroxyphenyl)pentane;

bis(4-hydroxyphenyl)ether;

4,4'-thiodiphenol;

p,p'-dihydroxydiphenyl;

bis(3-ethyl-4-hydroxyphenyl)ether;

bis(3,5-dibromo-4-hydroxyphenyl)sulfoxide; and

bis(4-hydroxyphenyl)sulfoxide.

A variety of additional dihydric phenols are also available and are described, inter alia, in U.S. Patent Nos. 2,999,835, 3,028,365 and 3,153, 008, all of which are incorporated herein by reference.

It is, of course, possible to use mixtures of two or more different dihydric phenols as well as individual dihydric phenols in the preparation of the instant copolyester-carbonates.

The carbonate precursor may be a carbonyl halide, a bishaloformate, or a diarylcarbonate. The carbonyl halides include carbonyl bromide, carbonyl chloride, and mixtures thereof. The bishalformates include the bishaloformates of dihydric

phenols such as bischloroformates of 2,2-bis(4-hydroxyphenyl)propane, hydroquinone, and the like; or the bishaloformates of glycols such as the bishaloformates of ethylene glycol, neopentyl glycol, polyethylene glycol, and the like. Typical of the diarylcarbonates which may be employed are diphenyl carbonate and the di(alkylphenyl)-carbonates such as di(tolyl)carbonate. Some other non-limiting examples of suitable diaryl carbonates include di(naphthyl)carbonate, phenyl tolyl carbonate, and the like. The preferred carbonate precursors are the carbonyl halides with carbonyl chloride being the preferred carbonyl halide.

The ester precursor may be a difunctional carboxylic acid or and ester forming reactive derivative thereof. The difunctional carboxylic acids which are useful as the ester precursors include any difunctional carboxylic acid conventionally used in the preparation of linear polyesters. Generally, the difunctional carboxylic acids which may be used include the aliphatic carboxylic acids, the aliphatic aromatic carboxylic acids, and the aromatic carboxylic acids. These acids are described in U.S. Patent 3,169,121, which is incorporated herein by reference.

The preferred difunctional carboxylic acids are the aromatic carboxylic acids. Particularly useful aromatic carboxylic acids are those of the formula

II. 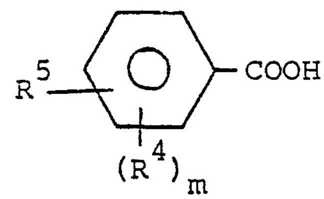

wherein:

$R^5$ is either a hydroxyl or carboxyl group;

$R^4$ is independently selected from alkyl radicals, preferably those containing from 1 to about 8 carbon atoms, and halogen radicals; and

m is a positive integer having a value of from 0 to 4 inclusive.

Particularly useful difunctional aromatic carboxylic acids of Formula II are the aromatic dicarboxylic acids, i.e., those acids of Formula II wherein $R^5$ is a carboxyl group.

Some particularly useful aromatic dicarboxylic acids are isophthalic acid, terephthalic acid, and mixtures thereof.

The preferred ester precursors are the ester forming reactive derivatives of the difunctional carboxylic acids, with the ester forming reactive derivatives of the aromatic dicarboxylic acids being preferred. Particularly useful ester forming reactive derivatives of the difunctional carboxylic acids are the acid dihalides. Some illustrative non-limiting examples of these acid dihalides include isophthaloyl dichloride, terephthaloyl dichloride, and mixtures thereof.

The copolyester-carbonates of the present invention may be conveniently prepared by the interfacial polymerization process utilizing the dihydric phenols of Formula I, the ester precursors, the carbonate precursor, a water immiscible organic solvent such as methylene chloride, an aqueous caustic solution, a molecular weight regulator, and a catalyst.

The molecular weight regulators include any of the known materials that control the molecular weight of the copolyester-carbonate by a chain terminating mechanism. These compounds include, but are not limited to, phenol, tertiarybutyl phenol, and chroman-I.

The catalysts which can be employed in the interfacial polymerization process are any of the known catalysts which catalyze the copolyester-carbonate forming reaction. These catalysts include, but are not limited to, tertiary amines such as triethylamine, tributylamine, and the like; quaternary ammonium compounds; and quaternary phosphonium compounds.

Also included herein are the randomly branched thermoplastic copolyester-carbonates formed by the reaction of the dihydric phenol, carbonate precursor, ester precursor, and a minor amount of a branching agent. Typically the branching agent is used in from about 0.05 to about 2 mole percent, based on the amount of dihydric phenol employed. These branching agents are well known in the art and are generally polyfunctional aromatic compounds containing at least three functional groups such as hydroxyl, carboxyl, haloformyl, anhydride, and mixtures thereof. Some illustrative non-limting examples of these branching agents include trimellitic anhydride, trimellitic acid, trimellityl trichloride, 4-chloroformyl phthalic anhydride, pyromellitic acid, pyromellitic dianhydride, trimesic acid, and the like. Other organic polyfunctional compounds useful in making these randomly branched thermoplastic copolyester-carbonates are disclosed, inter alia, in U.S. Patent Nos. 3,635,895 and 4,001,184, both of which are incorporated herein by reference.

The high molecular weight thermoplastic aromatic copolyester-carbonates of the instant invention generally have a weight average molecular weight in the range of from about 10,000 to about 200,000, preferably from about 25,000 to about 150,000.

The styrene resins which may be used in the preparation of the instant compositions or blends are well known and are generally commercially available or may be readily prepared by well known and conventional methods. These styrene resins are described, inter alia, in U.S. Patent 3,383,435; Billmeyer, Fred, W., Jr., Textbook of Polymer Science, Interscience Publishers, New York, 1966, pages 383-386 and 394-400; and Teach, W.C. and Kiessling, G.C. Polystyrene, Reinhold Publishing Corp., New York, 1960, all of which are hereby incorporated herein by reference.

The term "styrene resin" as used herein includes the homopolymers such as polystyrene and polychlorostyrene, the modified polystyrenes such as rubber modified polystyrenes, and the styrene containing copolymers such as the styrene-acrylonitrile copolymers, styrene-butadiene copolymers, styrene-acrylonitrile-alpha-alkyl styrene copolymers, acrylonitrile-butadiene-styrene copolymers, poly-alpha-methylstyrene, styrenecoumarine-indine copolymers, copolymers of ethylvinylbenzene and divinylbenzene, high impact polystyrenes, and the like.

Preferred styrene resins used in the instant invention are preferably those having at least about 25 weight percent polymer units derived from compounds having the general formula

III.

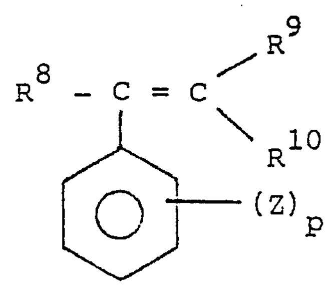

wherein $R^8$, $R^9$ and $R^{10}$ are independently selected from hydrogen, lower alkyl radicals, preferably those containing from 1 to about 5 carbon atoms, and halogen radicals, preferably chlorine or bromine; Z is independently selected from vinyl, halogen, preferably chlorine or bromine, and lower alkyl radicals, preferably those containing from 1 to about 5 carbon atoms, and p is 0 to 5 inclusive.

Particularly useful styrene containing copolymers are the acrylonitrile-butadeine-styrene resins (ABS resin), the molecules of which contain two or more polymeric parts of different compositions that are bonded chemically. The polymer is preferably prepared by polymerizing conjugated dienes, such as butadiene or a conjugated diene with a monomer copolymerizable therewith such as styrene, to provide a polymeric backbone. After formation of the backbone, at least one grafting monomer, and preferably two, are polymerized in the presence of the prepolymerized backbone to obtain the graft polymer. These resins are prepared by methods well known in the art.

The backbone polymer, as mentioned, is preferably a conjugated diene such as polybutadiene, polyisoprene, or a copolymer such as butadiene-styrene, butadiene-acrylonitrile, or the like.

The specific conjugated diene monomers normally utilized in preparing the backbone of the graft polymer are generically described by the formula

IV.

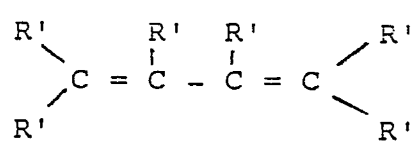

wherein R' is independently selected from hydrogen, lower alkyl groups, preferably those containing from 1 to about 5 carbon atoms, and halogens, preferably bromine or chlorine. Examples of dienes that may be used include butadiene, isoprene, 1,3-heptadiene, methyl-1,3-pentadiene, 2,3-dimethyl-1,3-butadiene, 2-ethyl-1,3-pentadiene, 1,3-and 2,4-hexadiene, chloro and bromo substituted butadienes such as dichlorobutadiene, bromobutadiene, and mixtures thereof, and the like. A preferred conjugated diene is butadiene.

One monomer or group of monomers that may be polymerized in the presence of the prepolymerized backbone are monovinylaromatic hydrocarbons. The monovinyl aromatic monomers utilized are generically described by formula IV with the exception that Z is independently selected from lower alkyl radicals and halogen radicals. Examples of the monovinylaromatic compounds include styrene, 3-methylstyrene, 3,5-diethylstyrene 4-n-propylstyrene, alpha-methylstyrene, alpha-methyl-toluene, alpha-chlorostyrene, alpha-bromostyrene, mixtures thereof, and the like. The preferred monovinylaromatic compounds are styrene and alpha-methylstyrene.

A second group of monomers that may be polymerized in the presence of the prepolymerized backbone are acrylic monomers such as acrylonitrile, substituted acrylonitrile and/or acrylic acid esters, exemplified by acrylonitrile, and alkyl acrylates such as methyl methacrylate.

The acrylonitrile, substituted acrylonitrile, or acrylic acid esters are described generically by the formula

V. 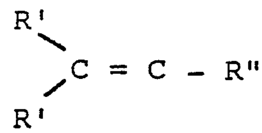

wherein R' is as previously defined and R" is selected from cyano and carbalkoxy wherein the alkoxy group of the carbalkoxy contains from 1 to about 12 carbon atoms. Examples of such monomers include acrylonitrile, ethacrylonitrile, methacrylonitrile, alpha-chloroacrylonitrile, beta-chloroacrylonitrile, alpha-bromoacrylonitrile and beta-bromoacrylonitrile, methyl acrylate, methyl methacrylate, ethyl acrylate, butyl acrylate, propyl acrylate, isopropyl acrylate, and mixtures thereof. The preferred acrylic monomer is acrylonitrile and the preferred acrylic acid esters are ethyl acrylate and methyl methacrylate.

In the preparation of the graft polymer, the conjugated diolefin polymer or copolymer exemplified by a 1,3-butadiene polymer or copolymer comprises about 50% by weight of the total graft polymer composition. The monomers polymerized in the presence of the backbone, exemplified by styrene and acrylonitrile, comprise from about 40 to about 95 percent by weight of the total graft polymer composition.

The second group of grafting monomers, exemplified by acrylonitrile, ethyl acrylate or methyl methacrylate, of the graft polymer composition, preferably comprise from about 10% to about 40% by weight of the total graft copolymer composition. The monovinylaromatic compound exemplified by styrene comprises from about 30 to about 70 weight percent of the total graft polymer composition.

In preparing the polymer it is normal to have a certain percentage of the polymerizing monomers that are grafted on the backbone combine with each other and occur as free copolymer. If styrene is utilized as one of the grafting monomers and acrylonitrile as the second grafting monomer a certain portion of the composition will copolymerize as free styrene-acrylonitrile copolymer. In the case where the alpha-methylstyrene (or other monomer) is substituted for the styrene in the composition used in preparing the graft polymer, a certain percentage of the composition may be an alpha-methylstyrene-acrylonitrile copolymer. Also, there are times when a copolymer, such as alpha-methylstyrene-acrylonitrile, is added to the graft polymer copolymer blend. When the graft polymer-copolymer blend is referred to herein, it is meant optionally to include at least one copolymer blended with the graft polymer composition and which may contain up to about 90% of free copolymer.

Optionally the elastomeric backbone may be an acrylate rubber, such as one based on n-butyl acrylate, ethyl acrylate, 2-ethylhexyl acrylate, and the like. Additionally minor amounts of a diene may be copolymerized in the acrylate rubber backbone to yield improved grafting with the matrix polymer.

These ABS type resins are also well known in the art and are generally commercially available.

The polyphenylene ethers are known polymers which are described, inter alia, in U.S. Patent Nos. 3,306,874, 3,306,875, 3,257,357 and 3,257, 348, all of which are incorporated herein by reference. Particularly useful polyphenylene ethers, from the standpoint of the instant compositions, are those containing at least the following repeating structural unit

VI. 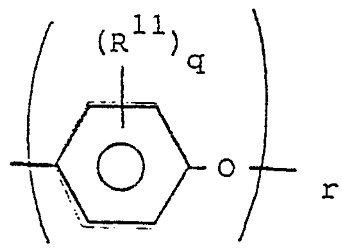

wherein $R^{11}$ is independently selected from monovalent substituents selected from halogen, hydrocarbon radicals free of tertiary alpha-carbon atoms, halohydrocarbon radicals having at least two carbon atoms between the halogen atom and the phenyl nucleus and being free of alpha-carbon atoms, hydrocarbonoxy radicals being free of a tertiary alpha-carbon atom, and halohydrocarbonoxy radicals having at least 2 carbon atoms between the halogen atom and the phenyl nucleus and being free of tertiary alpha-carbon atoms; q is a positive integer having a value of from 0 to 4 inclusive; and r is a positive integer of at least 50. Examples of suitable polymers may be found in the above referenced patents.

Particularly useful polyphenylene ethers of this type are those having alkyl substitution ortho to the oxygen atom and preferably ortho methyl substitution.

Particularly useful polyphenylene ethers are those containing recurring structural units represented by the general formula

VII. 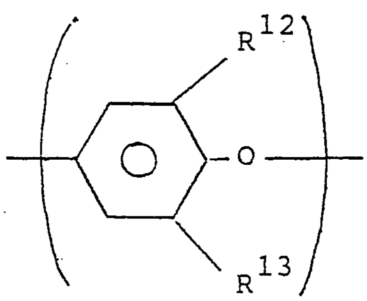

wherein $R^{12}$ and $R^{13}$ are independently selected from methyl and ethyl radicals.

Some illustrative non-limiting examples of polyphenylene ethers include poly(2,6-dimethyl-1,4-phenylene)ether, poly(2-methyl-6-ethyl-1,4-phenylene)ether, and poly(2,6-diethyl-1,4-phenylene) ether.

The instant blends contain (i) at least one copolyester-carbonate resin, and (ii) at least one resin selected from polyphenylene ether resins or mixtures of at least one polyphenylene ether resin and at least one polystyrene resin. The instant invention thus includes the following blends: BLEND A containing (i) at least one copolyester-carbonate resin, and (ii) at least one polyphenylene ether resins; and BLEND B containing (i) at least one copolyester-carbonate resin, (ii) at least one polyphenylene ether resin, and (iii) at least one polystyrene resin.

Generally, the instant blends contain from about 5 to about 95 weight percent of component -(i), i.e., at least one copolyester-carbonate resin, and from about 95 to about 5 weight percent of component (ii), i.e., at least one polyphenylene ether resin or a mixture of at least one polyphenylene ether resin and at least one polystyrene resin. Preferably the instant blends contain from about 15 to about 90 weight percent of component (i) and from about 85 to about 10 weight percent of component (ii). More preferably the instant blends contain from about 25 to about 75 weight percent of component (i) and from about 75 to about 25 weight percent of component (ii).

If component (ii) is comprised of a mixture of a polyphenylene ether resin and a polystyrene resin this mixture generally contains from about 10 to about 99 weight percent of polyphenylene ether resin and from about 90 to about 1 weight percent

of polystyrene resin. Preferably this mixture contains from about 15 to about 95 weight percent of polyphenylene ether resin and from about 85 to about 5 weight percent polystyrene resin. More preferably this mixture contains from about 25 to about 75 weight percent polyphenylene ether resin and from about 75 to about 25 weight percent polystyrene resin.

The compositions of this invention are prepared by any conventional mixing methods. For example, one method involves mixing the copolyestercarbonate resin, polyphenylene ether resin, or polyphenylene ether resin and polystyrene resin in powder or granular form in an extruder and extruding the mixture into strands, chopping the strands into pellets and molding the pellets into the desired article.

The compositions of the instant invention may optionally contain the well known and commonly used additives. These additives include, but are not limited to, fillers such as clay, talc, mica, and glass spheres or strands; impact modifiers; ultraviolet radiation absorbers such as the benzophenones, benzotriazoles, and cyanoacrylates; antioxidants; mold release agents; colorants; hydrolytic stabilizers such as the epoxides disclosed in U.S. Patent Nos. 3,489,716, 4,138,379 and 3,839,247, all of which are hereby incorporated herein by reference; color stabilizers such as the organophosphites; and flame retardants.

Some particularly useful flame retardants are the alkali and alkaline earth metals salts of organic sulfonic acids. These types of flame retardants are disclosed, inter alia, in U.S. Patent Nos. 3,933,734, 3,948,851, 3,926,908, 3,919,167, 3,909,490, 3,931,100, 3,978,025, 3,953,399, 3,917,599 3,951,910 and 3,940,366, all of which are hereby incorporated herein by reference.

In order to more fully and clearly illustrate the present invention the following examples are set forth. It is intended that the examples be considered as illustrative rather than limiting the invention as disclosed and claimed herein. In the examples all parts and percentages are parts and percentages by weight unless otherwise specified.

EXAMPLE 1

This example illustrates the preparation of a two component blend containing 1 part by weight of copolyester-carbonate resin and 1 part by weight of polyphenylene ether resin. One part by weight of a solution containing one part by weight of copolyester-carbonate resin dissolved in 9 parts by weight of chloroform is mixed with one part by weight of polyphenylene ether resin dissolved in 9 parts by weight of chloroform. The copolyester-carbonate resin has an ester content of about 75 mole percent, said ester content being about 93 mole percent terephthalate and about 7 mole percent isophthalate. The polyphenylene ether resin is General Electric Company's NORYL ® resin. The resultant solution mixture is then cast into a thin film. The film is subjected to visual inspection and is found to be slightly cloudy. This is an indication that the two components are generally compatible with each other.

EXAMPLE 2

This example illustrates the preparation of a three component blend containing 1 part by weight of copolyester carbonate resin, 0.5 part by weight of polyphenylene ether resin, and 0.5 part by weight of high impact polystyrene. One part by weight of a solution containing one part by weight of the copolyester-carbonate of Example 1 dissolved in 9 parts by weight of chloroform is mixed with 0.5 parts by weight of a solution containing one part by weight of the polyphenylene ether of Example 1 dissolved in 9 parts by weight of chloroform, and with 0.5 part by weight of a solution containing one part by weight of high impact polystyrene (U.S. Steel's high impact polystyrene 43-80) dissolved in 9 parts by weight of chloroform. The resultant solution mixture is solvent cast into a thin film and the film is subjected to visual inspection. The film is found to be transparent. This indicates good compatibility of the copolyester-carbonate resin, the polyphenylene ether resin, and the high impact polystyrene resin.

EXAMPLE 3

This example illustrates the preparation of a three component blend containing 3 parts by weight of copolyester-carbonate resin, 0.5 part by weight of polyphenylene ether resin, and 0.5 part by weight of high impact polystyrene resin. A copolyester-carbonate resin solution, a polyphenylene ether resin solution, and a high impact polystyrene solution are prepared substantially in accordance with the procedure of Example 2. Three parts by weight of the copolyester-carbonate solution are then mixed with 0.5 part by weight of the polyphenylene ether solution and 0.5 part by weight of the high impact polystyrene solution. The resultant solution mixture is then solvent cast into a thin film. This thin film is subjected to visual inspection and is found to be transparent. This is an indication of good compatibility of the three components in the instant blends.

EXAMPLE 4

This example illustrates the preparation of a three component blend containing 1 part by weight of copolyester-carbonate resin, 1.5 parts by weight of polyphenylene ether resin, and 1.5 parts by weight of high impact polystyrene resin. A copolyester-carbonate solution, a polyphenylene ether solution, and a high impact polystyrene solution are prepared substantially in accordance with the procedure of Example 2. One part by weight of the copolyester-carbonate solution is mixed with 1.5 parts by weight of the polyphenylene ether solution and 1.5 parts by weight of the high impact polystyrene solution. The resultant solution mixture is then solvent cast into a thin film. This film is then subjected to visual inspection and is found to be transparent. This is an indication of good compatability of these three components.

EXAMPLE 5

This example illustrates the preparation of a two component blend containing 1 part by weight of copolyester-carbonate resin and 2 parts by weight of polyphenylene ether resin. One part of a copolyester-carbonate resin of Example 1 is placed into a Hake rheocord torque rheometer and heated at 275°C. until molten. To this molten copolyester-carbonate resin are added, slowly, two parts by weight of a polyphenylene ether resin of Example 1. Heating is continued until the polyphenylene ether resin is molten. The molten blend is allowed to cool and solidify, and is then compression molded into test bars. The test bars are translucent and have second order glass transition temperatures of 166°C. and 212°C.

The present invention provides a means for simultaneously upgrading many properties of copolyester-carbonates and polyphenylene ethers and is predicated upon the discovery that the copolyester-carbonates and the polyphenylene ethers, or copolyester-carbonates, polyphenylene ethers, and polystyrenes are generally combinable over a wide range of proportions resulting in thermoplastic compositions having many properties improved over those of either copolyester-carbonates or polyphenylene ethers alone.

As an additional advantage of the instant invention it has been found that the blending of copolyester-carbonates with either polyphenylene ethers or with mixtures of polyphneylene ethers and polystyrenes allows for custom formulation of compositions having predetermined properties ranging between those of copolyester-carbonates and polyphenylene ethers by controlling the ratio of these components. This is somewhat unusual since blending of two or more polymers generally results in compositions displaying distinct sets of properties, i.e., one for each of the resinous components.

## Claims

1. A resinous composition comprising, in physical admixture:

(i) at least one copolyester-carbonate resin; and

(ii) at least one resin selected from polyphenylene ether resins or mixtures of polyphenylene ether resins and polystyrene resins.

2. The composition of claim 1 wherein said copolyester-carbonate resin is derived from at least one dihydric phenol, at least one ester precursor, and a carbonate precursor.

3. The composition of claim 2 wherein said ester precursor is selected from isophthaloyl dihalide, terephthaloyl dihalide, and mixtures thereof.

4. The composition of claim 3 wherein said carbonate precursor is phosgene.

5. The composition of claim 4 wherein said dihydric phenol is bisphenol-A.

6. The composition of claim 5 wherein said copolyester-carbonate has an ester content of about 75 mole percent.

7. The composition of claim 6 wherein said ester content is comprised of about 93 mole percent terephthalate and about 7 mole percent isophthalate.

8. The composition of claim 1 which contain from about 5 to about 95 weight percent of (i) and from about 95 to about 5 weight percent of (ii).

9. The composition of claim 8 which contains from about 15 to about 90 weight percent of (i) and from about 10 to about 85 weight percent of (ii).

10. The composition of claim 10 which contains from about 25 to about 75 weight percent of (i) and from about 25 to about 75 weight percent of (ii).

11. The composition of claim 1 wherein (ii) is a polyphenyelne ether resin.

12. The composition of claim 11 wherein said polyphenylene ether resin contains at least one recurring structural unit represented by the general formula

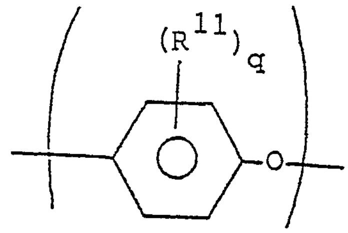

wherein $R^{11}$ is independently selected from monovalent substituents, and q is a positive integer having a value of from 0 to 4 inclusive.

13. The composition of claim 12 wherein said monovalent substituents represented by $R^{11}$ are selected from halogen, hydrocarbon radicals free of a tertiary alpha-carbon atoms, halohydrocarbon radicals having at least two carbon atoms between the halogen atom and phenyl nucleus and being free of a tertiary alpha-carbon atom, and hydrocarbonoxy radicals being free of a tertiary alpha-carbon atom, and halohydrocarbonoxy radicals having at least two carbon atoms between the halogen atom and phenyl nucleus and being free of a tertiary alpha-carbon atom.

14. The composition of claim 13 wherein said recurring structural unit is represented by the general formula

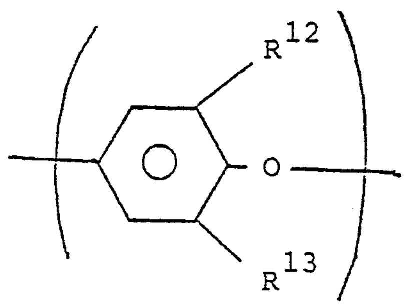

wherein $R^{12}$ and $R^{13}$ are independently selected from methyl and ethyl radicals.

15. The composition of claim 1 wherein (ii) is comprised of a mixture of at least one polyphenylene ether resin and at least one polystyrene resin.

16. The composition of claim 15 wherein said polystyrene resin is a high impact polystyrene resin.

17. The composition of claim 15 wherein said mixture contains from about 10 to about 99 weight percent polyphenylene ether resin and from about 1 to about 90 weight percent polystyrene resin.

18. The composition of claim 17 wherein said mixture contains from about 25 to about 75 weight percent polyphneylene ether resin and from about 25 to about 75 weight percent polystyree resin.

19. The composition of claim 1 which further contains a flame retardant amount of at least one flame retardant compound.

20. The composition of claim 19 wherein said flame retardant compound is selected from the alkali and alkaline earth metal salts of organic sulfonic acids.